## Europäisches Patentamt
## European Patent Office
## Office européen des brevets

(11) Numéro de publication: **0 064 004**
**B1**

(12) # FASCICULE DE BREVET EUROPEEN

(45) Date de publication du fascicule du brevet:
**13.02.85**

(51) Int. Cl.⁴: **F 16 L 25/00,** F 16 L 37/00

(21) Numéro de dépôt: **82400711.6**

(22) Date de dépôt: **21.04.82**

(54) **Tuyauterie avec élément démontable et mécanisme de pose et dépose dudit élément.**

(30) Priorité: **22.04.81 FR 8108026**

(43) Date de publication de la demande:
**03.11.82 Bulletin 82/44**

(45) Mention de la délivrance du brevet:
**13.02.85 Bulletin 85/7**

Etats contractants désignés:
**AT BE CH DE GB IT LI LU NL SE**

(56) Documents cités:
**US - A - 1 635 782**
**US - A - 3 299 950**
**US - A - 3 481 396**
**US - A - 3 490 609**
**US - A - 3 921 684**

(73) Titulaire: **GTM-ENTREPOSE, 61 Av. Jules Quentin,**
**F-92003 Nanterre (FR)**

(72) Inventeur: **Dherbilly, Pierre, 72, Sente du Pin,**
**F-93370 Montfermeil (FR)**

(74) Mandataire: **Caunet, Jean et al, Cabinet BEAU DE**
**LOMENIE 55, rue d'Amsterdam, F-75008 Paris (FR)**

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

Certaines installations de tuyauterie comportent des éléments démontables, par exemple des vannes, dont l'accès direct est interdit ou impossible, notamment du fait qu'ils sont incorporés à des tuyauteries rigides, protégées dans des enceintes parce que véhiculant des liquides dangereux ou irradiants.

Il convient cependant de pouvoir monter ou démonter ces éléments à distance. La présente invention concerne les moyens qui permettent ces opérations à distance en garantissant leur exécution de manière sûre. On connaît des dispositifs permettant de réaliser des accouplements à distance de deux éléments de tuyauterie. Ils consistent généralement en un appareil comportant deux butées susceptibles d'être liées aux éléments de tuyauterie à connecter et d'être rapprochées l'une de l'autre le long d'un guide. Les éléments de tuyauterie sont alors emmanchés l'un dans l'autre. Il convient dans ce cas que l'un au moins de ces éléments soit libre et mobile. Or, dans certaines constructions les deux tronçons sont fixes par rapport à une structure et les appareils connus ne sont plus applicables.

L'invention a donc pour objet une tuyauterie rigide dé Formable élastiquement comportant deux portions assemblées à un élément démontable et un mécanisme associé à ladite tuyauterie permettant la pose et la dépose dudit élément à distance, lesdites portions étant fixes par rapport à une structure de soutien et comportant chacune une bride de raccordement audit élément tanndis que le mécanisme susdit comporte un organe de manoeuvre de l'une des brides par rapport à l'autre bride le long d'organes de guidage.

Conformément à l'invention, l'une des portions susdites de tuyauterie est conformée de manière à posséder une flexibilité suffisante pour autoriser le mouvement de la bride correspondante le long desdits organes de guidage sous l'effet du mécanisme susdit.

Dans un premier mode de réalisation, ledit mécanisme est constitué par un étau de mâchoire fixe solidaire de la première bride et de mâchoire mobile solidaire de la seconde bride, l'organe susdit étant constitué par une vis dont l'écrou est ladite mâchoire mobile.

Dans un second mode de réalisation, la seconde bride est solidaire d'une came coopérant elle-même avec un coin manoeuvré par ledit organe à la manière d'un système vis-écrou.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels:

— la figure 1 est un schéma illustrant une première réalisation de l'invention.

— la figure 2 est un schéma illustrant une seconde réalisation de l'invention.

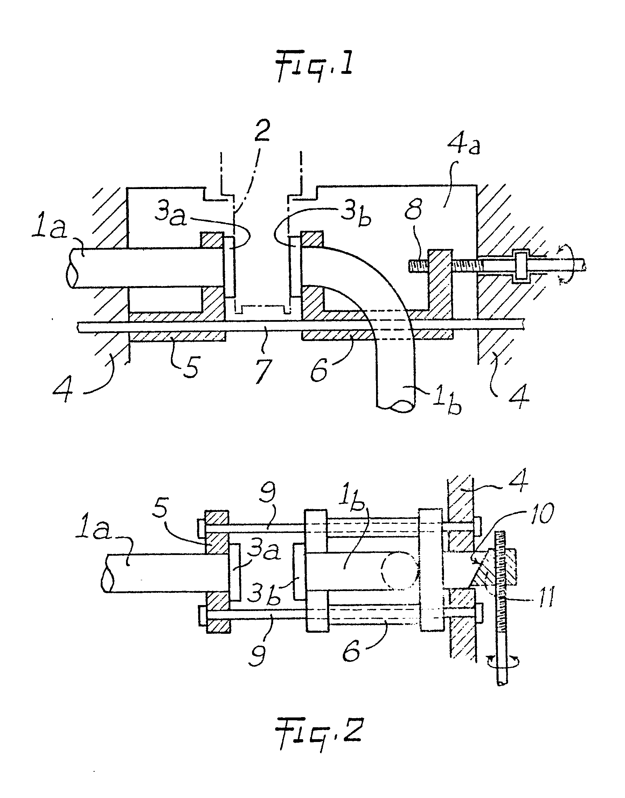

En se reportant tout d'abord à la figure 1, on voit une tuyauterie comportant un premier tronçon 1a, un second tronçon 1b et un élément démontable 2 intercalé entre ces tronçons. Cet élément 2 (une vanne par exemple) est assujetti à la tuyauterie au moyen de brides 3a, 3b solidaires de tronçons 1a, 1b et de contre-brides non représentées, solidaires de la vanne. Les tronçons 1a et 1b susdits sont fixes par rapport à une structure 4 de soutien (une infrastructure de génie civil ou métallique ...) qui définit un espace 4a dans lequel est réalisée la connexion des tronçons 1a, 1b à l'élément 2. En outre, la bride 3a est rendue fermement solidaire de la structure 4 au moyen d'un organe d'appui 5. La bride 3b est quant à elle solidaire d'une sorte de chariot 6 mobile le long d'organes de guidage 7 qui s'étendent perpendiculairement aux plans (parallèles) des brides 3a et 3b.

Ledit chariot peut être manoeuvré le long des guides 7 à la manière d'une mâchoire mobile d'un étau, la bride 3a et l'organe 5 constituant la mâchoire fixe, au moyen d'une vis 8 immobilisée en translation par rapport à la structure 4. La vis peut être animée en rotation par tout moyen connu et au besoin par un système de renvoi d'angle.

On notera que la mobilité de la bride 3b n'est possible que si le tronçon de tuyauterie 1b est suffisamment flexible pour permettre le déplacement susdit. L'une des solutions constructives permettant de conférer cette flexibilité réside comme illustré par la figure dans la conformation du tronçon 1b en un coude pour que le plan de la bride 3b soit sensiblement parallèle à l'axe de la tuyauterie qui formera la partie fléchissante, cette partie fléchissante pouvant être encastrée dans la structure 4 à la base de l'espace 4a.

L'invention permet d'assujettir la vanne 2 par pincement entre les deux brides 3a et 3b — avec interposition de joints appropriés — sans avoir à opérer au lieu même ou le raccordement est assuré.

Sur la figure 2 on a illustré une variante de réalisation de la figure 1 dans laquelle l'appui 5 est assujetti à une partie de structure 4 située du côté du tronçon 1b de tuyauterie au moyen de tirants 9 qui constituent les guides du chariot 6 susdit. Le chariot 6 est manoeuvré le long de ce guide au moyen d'une surface de came 10 à pente actionnée par un coin 11 formant l'écrou d'un système visécrou. Le retour du chariot pourra être assuré par la seule élasticité du tronçon de tuyauterie 1b.

L'inventin trouve une application intéressante dans le domaine des matériels et mécanismes sous protection biologique ou dans les installations protégées du fait de la nature des produits véhiculés.

## Revendications

1. Tuyauterie rigide déformable élastiquement, comportant deux portions (1a) et (1b) assemblés à un élément démontable (2) et un mécanisme associé à ladite tuyauterie permettant la pose et la dépose dudit élément à distance, lesdites portions étant fixes par rapport à une structure (4) de soutien et comportant chacune une bride de raccordement (3a et 3b) audit élément (2) tandis que le mécanisme susdit comporte un organe (6, 8) de manoeuvre de l'une des brides (3b) par rapport à l'autre bride (3a) le long d'organes de guidage (7), dans laquelle l'une des portions (1b) susdites de tuyauterie est conformée de manière à posséder une flexibilité suffisante pour autoriser le mouvement de la bride correspondante (3b) le long desdits organes de guidage sous l'effet du mécanisme susdit.

2. Tuyauterie selon la revendication 1, dans laquelle ledit mécanisme est constitué par un étau de mâchoire fixe (5) solidaire de la première bride (3a) et de mâchoire mobile (6) solidaire de la seconde bride (3b) l'organe susdit étant constitué par une vis (8) dont l'écrou est ladite mâchoire mobile (6).

3. Tuyauterie selon la revendication 1, dans laquelle la seconde bride (3b) est solidaire d'une came (10) coopérant elle-même avec un coin (11) manoeuvré par ledit organe à la manière d'un système vis-écrou.

## Patentansprüche

1. Elastisch verformbare, starre Rohrleitung, mit zwei an ein demontierbares Element (2) angefügten Abschnitten (1a und 1b) und einem mit der Rohrleitung verbundenen Mechanismus zum Anbringen und Entfernen des Elements aus Entfernung, welche Abschnitte gegenüber einer Stützstruktur (4) ortsfest sind und jeweils einen Anschlußflansch (3a und 3b) zum Element (2) aufweisen, während der Mechanismus ein Organ (6, 8) zum Betätigen eines der Flansche (3b) in bezug auf den anderen Flansch (3a) entlang von Führungsorganen (7) umfaßt, dadurch gekennzeichnet, daß einer der Abschnitte (1b) der Rohrleitung derart gestaltet ist, daß er eine ausreichende Flexibilität besitzt, um die Bewegung des entsprechenden Flansches (3b) entlang der Führungsorgane unter der Wirkung des Mechanismus ermöglicht.

2. Rohrleitung nach Anspruch 1, dadurch gekennzeichnet, daß der Mechanismus durch einen Schraubstock mit fixer, mit dem ersten Flansch (3a) verbundener Klemmbacke (5) und beweglicher, mit dem zweiten Flansch (3b) verbundener Klemmbacke (6) gebildet ist, wobei das genannte Organ aus einer Schraube (8) besteht, deren Mutter die bewegliche Klemmbacke (6) ist.

3. Rohrleitung nach Anspruch 1, dadurch gekennzeichnet, daß der zweite Flansch (3b) mit einer Nocke (10) verbunden ist, die wiederum mit einem durch das Organ nach Art eines Schrauben-Mutter-Systems betätigten Keil (11) zusammenwirkt.

## Claims

1. Elastically deformable rigid pipes, comprising two portions (1a) and (1b) assembled to a dismountable element (2) and a mechanism associated to said pipes provided for remotely laying and dismounting said element, said portions being fixed with respect to a supporting structure (4) each comprising a flange (3a and 3b) for connection to said element (2), whereas said mechanism comprises a member (6, 8) for moving one of the flange (3b) with respect to the other flange (3a) along guiding members (7), pipes wherein one of the portion (1b) of pipes is so shaped as to have sufficient flexibility to enable the correspoonding flange (3b) to move along said guiding members under the effect of said mechanism.

2. Pipes according to claim 1, wherein said mechanism is constituted by a vice, of which one jaw (5) is fixed and integral with the first flange (3a), and the other jaw (6) is movable and integral with the second flange (3b), said member being constituted by a screw (8) the nut of which is said movable jaw (6).

3. Pipes according to claim 1, wherein the second flange (3b) is integral with a cam (10) which also cooperates with a wedge-type element (11) operated by said member in the manner of a screw-and-nut system.

## Fig.1

## Fig.2